# EUROPEAN PATENT SPECIFICATION

(11) **EP 1 138 178 B1**
(45) Date of publication and mention of the grant of the patent: **01.02.2006**
(21) Application number: 99927415.2
(22) Date of filing: 09.06.1999
(51) Int. Cl.: H05B 41/38, H04B 10/10, H04L 9/08

(54) **COMMUNICATION SYSTEM**
NACHRICHTENÜBERTRAGUNGSSYSTEM
SYSTEME DE COMMUNICATION

(30) Priority: 13.11.1998 US 108287 P; 11.01.1999 US 115374 P; 14.04.1999 US 292126; 14.04.1999 US 291709; 14.04.1999 US 291706
(43) Date of publication of application: 04.10.2001
(73) Proprietor: Talking Lights LLC, Boston, MA 02109 (US)
(72) Inventor: LUPTON, Elmer, C., Boston, MA 02109 (US); LEEB, Steven, B., Belmont, MA 02178 (US); HOVORKA, George, B., Rowley, MA 01969 (US); JACKSON, Deron, San Jose, CA 95121 (US)
(74) Representative: Greenwood, John David
(86) International application number: PCT/US1999/013060
(87) International publication number: WO 2000/030415

(56) References cited:
- EP-A- 0 131 917
- EP-A- 0 456 462
- EP-A- 0 756 397
- EP-A- 0 876 013
- WO-A-96/31021
- DE-A- 19 607 468
- FR-A- 2 751 491
- US-A- 4 764 982
- US-A- 4 959 828
- US-A- 4 996 719
- US-A- 5 731 997
- BUFFALOE T K ET AL: "FIAT LUX: A FLUORESCENT LAMP TRANSCEIVER" APEC '97. TWELTH ANNUAL APPLIED POWER ELECTRONICS CONFERENCE AND EXPOSITION, ATLANTA, FEB. 23 - 27, 1997, vol. 2, no. CONF. 12, 23 February 1997 (1997-02-23), pages 1037-1041, XP000731063 INSTITUTE OF ELECTRICAL AND ELECTRONICS ENGINEERSISBN: 0-7803-3705-0 cited in the application
- JACKSON D K ET AL: "Fiat lux: a fluorescent lamp digital transceiver" IEEE TRANSACTIONS ON INDUSTRY APPLICATIONS, MAY-JUNE 1998, IEEE, USA, vol. 34, no. 3, pages 625-630, XP002113697 ISSN: 0093-9994

## Description

The present invention relates to a communications network.

### Background of the Invention

A communication network is a means for conveying information from one place to another. The information can be in audio, digital data, video, text, graphics, data, sign language or other forms. The network can be a wide area network such as an intranet in an office, store or factory. Establishing and maintaining communication networks is one of the oldest known activities of mankind ranging from the shouting and drum signals of prehistory through written messages, signal flags, signal fires, smoke signals, signal mirrors, heliographs, signal lanterns, telegraphs, radios, telephones, televisions, microwave signals, linked computers and the internet. Improving communication networks will continue to be a major technical focus in the future.

The ideal communication network would be non-intrusive, inexpensive, extremely large information carrying capability (wide bandwidth), instantaneous and suitable for use with a broad variety of transmission and reception technologies.

There have been a few reports of the use of visible lighting as a carrier in electronic communication networks. The earliest reference to using lighting to send electronic information as well as to provide illumination appears to be Dachs (US Patent 3,900,404) disclosing an analog amplitude-modulation (AM) scheme to modulate the arc current in a fluorescent lamp, the "carrier" signal, with an audio information signal. King, Zawiski and Yokoun (US Patent 5,550,434) disclosed an updated electronic circuit that also provides for AM modulation of the arc current with an analog signal. Smith (US Patent 5,657,145) teaches a method for encoding low-bandwidth digital information into the lamp light using a pulsed AM technique. The encoding technique involves chopping 100 microsecond slices of current out of the arc waveform. Nakada (Japanese Patent application 60-32443, Feb 19, 1985.)reports a FM modulation and a frequency shift keying (FSK) scheme to transmit digital data using visible lighting. Gray (U.S. Patent 5,635,915 June 3, 1997 and PCT WO90/13067, Oct 11, 1991.) has reported a product pricing system for supermarket shelf labels where a signal is sent from visible lighting to individual product price labels on shelves to cause the listed prices to change when desired.

Other communication schemes have been proposed that do not use the lamp light as the carrier, but instead use the lamp fixture as an antenna for transmitting conventional radio wave or microwave signals. In Uehara and Kagoshima (U.S. Patent 5,424,859), for example, the inventors disclose techniques for mounting a microwave antenna on the glass surface of fluorescent and incandescent lamps. Buffaloe, Jackson, Leeb, Schlecht, and Leeb, ("Fiat Lux: A Fluorescent Lamp Transceiver," *Applied Power Electronics Conference,* Atlanta, Georgia, 1997) first outlined the possibility of using pulse-code modulation to transmit data with a fluorescent lamp. In the latter reference, a three-level code shifts the are frequency to one of three possibilities every Tsw= 2 milliseconds. The result is a steady light output, on average, with no perceptible flicker. A one or a zero bit does not correspond to a particular arc frequency, but rather, to a three level pattern in arc frequency. A logic zero bit is transmitted by varying the arc frequency first to 40 kHz, then to 38 kHz, and finally to 36 kHz. A logic one bit is transmitted by the arc frequency pattern beginning with 38 kHz, followed by 40 kHz, and ending with 36 kHz. A unique start bit, used to demarcate the beginning of a transmitted byte, is represented by a sequence in the arc frequency beginning with 36 kHz, followed by 38 kHz, and ending with 36 kHz.

In our previously filed patent applications serial number 09/291,706 filed April 14, 1999 and entitled "Dual-Use Electronic Transceiver Set for Wireless Data Networks" and application serial number 09/292,I26 filed April 14, 1999 entitled "Analog and Digital Electronic Receivers for Dual-Use Wireless Data Networks", we have disclosed visible light communications networks for analog and digital data based on frequency modulation of light. The modulation techniques include direct FM, 2 level half weight bit coding and other orthogonal bit coding schemes.

The visible light case mentioned above is a specific case of our invention which, stated generally, involves simultaneous intentional dual use of transmitted electromagnetic radiation for two completely different useful purposes.

### Summary of the Invention

With the new technology disclosed in our previously filed applications, the recent advances in computer technology and other improvements in electronics, a number of applications and uses are now enabled. These applications are most preferentially executed using our new technology. However, in some cases, they may be executed using some of the other technologies known in the prior art. [D1] discloses Buffaloe T K et al: Fiat Lux: A Fluorescent Lamp Transceiver' APEC '97. Twelfth Annual Applied Power Electronics Conference and Exposition, Atlanta, Feb. 23-27, 1997, vol. 2, no. Conf. 12, 23 February 1997, pages 1037-1041, Institute of Electrical and Electronics Engineers describes an optical transceiver system which transmits information by modulating the arc in a fluorescent lamp. The prototype transmitter is a switching power electronic ballast that uses a pulse frequency modulation scheme to ensure that the lamp exhibits no flicker perceptible to the human eye. A portable receiver decodes the information coded in the lamp light.

The present invention is as claimed in the claims. Embodiments of the invention can provide a number of uses and purposes for the light based communication network. One purpose is to process the signal from the light is by the receiver to control the selection of information from a computer memory , CD or other storage device for large scale storage of data, greatly increasing the effective bandwidth of the information which can be transmitted. Another purpose is to provide data to the user from the receiver from both a large scale data storage device, like a computer memory, compact disk or other such device, and from the information transmitted by the light, with segments of data from the sources interspersed in presentation to the user. Another purpose is to provide data from a device source, like a computer chip, a tape cassette a compact disk or other such device, to the transmitter. Another purpose is to repeat continually the data from the device source, providing a continuous signal of finite period to the user. Another purpose is to use two or more transmitting lights, each transmitting its own signal at the same frequency to provide spatial resolution of signal so that the receiver will receive and provide to the user information from only one of the lights at any time and the receiver may shift its reception from one light to another. Another purpose is to transmit two or more different signals simultaneously at different frequencies from one light in such a manner that two or more receivers can each pick up the different signals. Another purpose is to transmit two or more different signals containing the same information in two or more different languages or codes so that by selecting the proper frequency, the user can select information in the language or code they deem most suitable. Another purpose is to encrypt the information prior to transmission and decrypted it subsequent to receipt. Another purpose is to use the lighting of an individual exhibit to provide to the user a description of some aspect of the exhibit. Another purpose is to transmit information over the network is used to provide assistance to individuals who are visually impaired. Another purpose is to transmit information transmitted over the network to provide assistance to individuals who are hearing impaired. Another purpose is to transmit over the network to provide assistance to individuals who are mentally impaired. Another purpose is to transmit the information transmitted over the network for processing by the user and subsequent sending out of a responding signal by the user using some means. Another purpose is to use the network to provide information to a receiver and user which are moving. Another purpose is to use the network to provide information inside an aircraft, boat, submarine, bus, auto, train or other vehicle. Another purpose is to use the network to provide guidance information to a receiver and user which are moving. Another purpose is to use the network to provide safety or warning information. Another purpose is to use create a network where the same information is being provided by a plurality of different lights. Another purpose is to use the network to provide paging information to the user. Another purpose is to provide information in classrooms and other meeting rooms. Another purpose is to create a repeater network where the modulated signal initiated by one light will be received by an adjoining light, that light started modulating, etc. until all lighting in a network is being modulated and carrying the signal. Another purpose is to create a network in which the receptor has the capability to receive signals in more than one wavelength range. Another purpose is to create a network in which there is a vibrating warning signal. Another purpose is to create a network to transmit compressed data.

### Brief Description of the Drawing

Fig. 1 is a schematic illustration of the invention.
Fig. 2 is a schematic illustration of a guidance embodiment of the invention.

### Description of the Preferred Embodiment

### A Computer as a User

One important application for our communication network involves inputting data into a computer. In one usage of this approach, light can be used as a positional locator or a data source. One such device which would use light provided digital data we will refer to as a Personal Locator and Minder or PLAM. In this system, each modulated light will deliver a relatively simple unique signal. This signal could either be a random signal which is uniquely assigned to that light, or else could be based on some kind of geographical matrix. The Personal Locator and Minder will receive the signal from the nearest modulated light, identify the location of that light from information in its memory, compare the location of that light with the location the PLAM is scheduled to be at that particular moment, and then carry out appropriate actions in accordance with its preprogramming. This aspect has application to patients in a hospital or assisted care facility context.

Since each patient has their own PLAM programmed with their own schedule, the system can accommodate as many different patients simultaneously as is desired. Each light will be continuously communicating location. The individual patient's PLAM will be reading this location information and then giving the individualized guidance to the patient.

The second programming feature which can be included in the PLAM will be the ability to record the daily activities and mobility of a patient. In addition to providing and cueing a personal schedule for a patient, the PLAM can also record how many warnings or inconsistencies in schedule versus actual location occurred during the course of an arbitrary time interval. This information could be stored in the PLAM and downloaded when convenient giving a unique and highly detailed record of a patient's mobility and awareness at every location and time during a day.

Another important application for the computer as user will involve the use of an addressable electronic memory device. This device can be a RAM type device, ROM computer memory or storage device like a CD. The addresses can be partially or totally selected based on information provided over modulated lights. The information from the memory can then be used for any of the purposes well known in the art.

Still another application for the computer as user involves the decryption of an encrypted message. The message is encrypted using a method known in the prior art for which there is a decryption key. The key is not provided to the user and is not retained in the computer. The decryption key is supplied continually over the modulated lights. Only when the lights are providing the key can the user decode the information. The security code can be varied in a timed fashion or some other method known in the art. This providing of the decryption code by the lights will provide an additional level of security since only when the user is in the physical presence of the lights will the encrypted message be able to be decoded.

The most general statement of our invention is that it involves simultaneous intentional dual use of transmitted electromagnetic radiation for two or more functionally different useful purposes.

When the wavelength range of the electromagnetic radiation used for one or more simultaneous functionally different useful purposes is outside the visible wavelength range, we will refer to that radiation as "non-visible radiation." It is understood that under some circumstances, a source which is intended to generate electromagnetic radiation outside the visible wavelength range will also generate some visible radiation. If one or more of the simultaneous useful purposes makes principal use of radiation outside the visible wavelength range, it will be considered "non-visible radiation" notwithstanding the generation of the visible radiation. An example would be a suntanning booth in which the UV light source would be modulated in order to allow communication with the user. Even though the UV light source would simultaneously generate some visible electromagnetic radiation, the useful purpose of tanning the skin would make principal functional use of ultraviolet radiation, so this radiation would qualify as "non-visible radiation." This designation as "non-visible radiation" would pertain whether the modulated UV light is detected by the receiver and used for communication, or the simultaneously generated visible electromagnetic radiation is detected by the receiver and used for communication. Since one useful purpose, namely tanning the skin, makes principal use of electromagnetic radiation outside the visible wavelength range, the radiation qualifies as "non-visible radiation."

In one preferred embodiment of this invention, one useful functional purpose of the embodiment is communication and the other useful functional purpose is some purpose other than communication. In another preferred embodiment, both useful functional purposes of the embodiment are some purpose other than communication.

In one preferred embodiment of the invention, one of the useful functional purposes makes primary use of electromagnetic radiation outside of the visible wavelength range. In another preferred embodiment of the invention, two or more of the useful functional purposes make primary use of electromagnetic radiation outside of the visible wavelength range.

An essential part of this invention is that the electromagnetic radiation must be free from application unacceptable flicker. Generally, this application unacceptable flicker occurs when variations due to the second utility of the radiation interfere with the first utility or vice versa. An example of application unacceptable flicker for visible radiation would be visually perceptible flicker such that the light is considered unacceptable for illumination. For other examples, such as a radar set, application unacceptable flicker could mean that the flicker would interfere with radar detection.

In the examples below, the exact circuitry and systems can be designed and built by an individual of ordinary skill in the art of electrical engineering using, where appropriate, the unique communication network of our previously filed patent applications identified above.

### Example 1 - Personal Locator and Minder Network

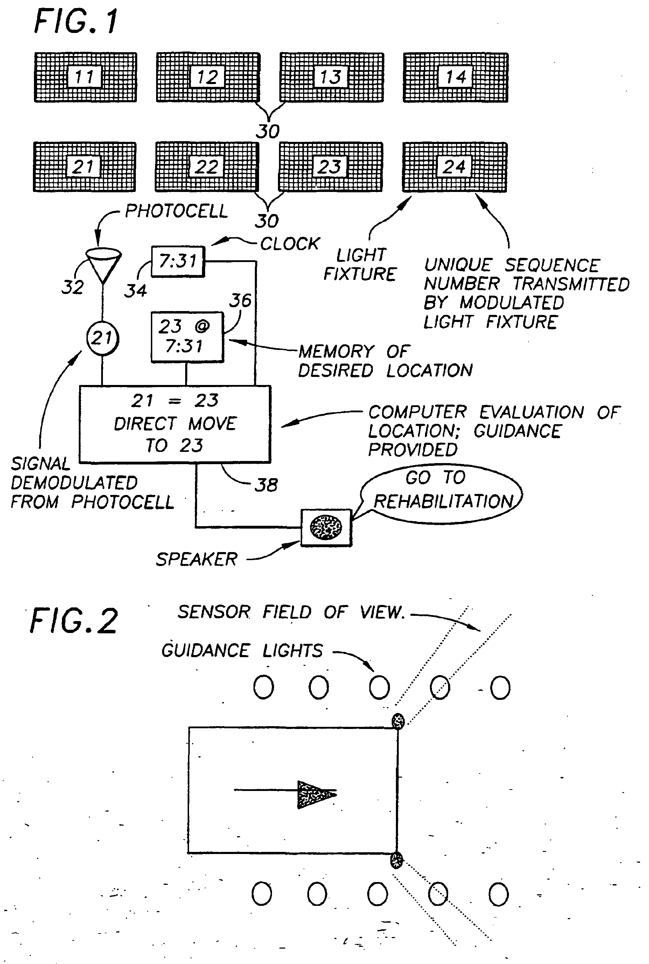

As is shown in Fig. 1, the network is-created with a plurality of modulated lights 30, each transmitting its own unique signal. In a preferred embodiment, each modulated light 30 is self contained, except optionally for a power supply, which can be either line power or battery power. The modulated lights are not controlled from a central location.

The PLAM in this example contains a photocell 32 capable of receiving light and circuitry capable of demodulating the signal from the nearest light and identifying the unique signal, a clock 34, a computer memory 36 capable of storing the desired location of the PLAM at any specified time, and a computer 38 capable of evaluating signal received from the photocell 32, comparing that signal with the desired location of the PLAM and presenting information to the user based on the comparison. This information could be reassurance or silence if the signal received is the desired preprogrammed location signal, while it could be guidance or remonstrance if the signal received is not the desired preprogrammed location signal.

Each of a plurality-of users can have their own PLAM programmed with their own schedule. Each light will be continuously communicating location. The individual user's PLAM will be reading this location information and then giving the individualized guidance to the user.
PLAM and its enhancements can be valuable to a number of users including brain disabled individuals, such as individuals suffering from traumatic brain injury, Alzheimer's disease or other dementia; children in a child care environment; and individuals in a secure-environment whose movements must be monitored and recorded.

### Example 2 - Enhanced Personal Locator and Minder

PLAM is programmed with the planned schedule for the user. When the time for one of the day's scheduled activities is noted by PLAM, the device takes note of the nearest modulated light and compares that with the location where the patient should be. If the light is in the place where the user is scheduled to be, the device simply notes this. However, if the user is in a place other than where he or she is scheduled to be, the device will remind the user of their scheduled location. A more sophisticated version of PLAM will also have in its memory the proper route for the patient to take to proceed to their desired location. As the user would proceed along the path to their desired location, PLAM will take note of the lights which the device is passing and correct the patient if they should take a wrong turn or stop.

### Example 3 - Personal Locator and Minder with Alarm

The PLAM also contains a radio transmitter, microwave transmitter or other transmitter device. If the user of the PLAM is determined by the computer to be in an unauthorized area, this PLAM sends a signal to an attendant. This attendant could be a nurse in a hospital environment, a teacher or day care attendant in a day care environment or a security guard in a secure environment.

### Example 4 - Personalized voice messages

In the previous examples, the computer memory of the PLAM is programmed with a voice of personal significance to the user. We define a voice of personal significance to the user to be a voice of a person who has some significant emotional and/or historical tie to the user. Most preferred as voices of personal significance would be the voice of the person themself, or the voices of the person's parents, siblings, children, spouse, business partners, or close friends. Other examples of voices of personal significance, not intending to be limiting, would be the person's former spouse(s), school classmates, friends and acquaintances, coworkers, current or former neighbors, and physicians, nurses or other caregivers.

### Example 5 - Enhanced PLAM with recording capability

To the PLAM of Example 2 will be the ability to record the daily activities and mobility of a user. In addition to providing and cueing a personal schedule for a user, the PLAM can also record how many warnings or inconsistencies in schedule versus actual location occurred during the course of an arbitrary time interval. This information could be stored in the PLAM and downloaded when convenient by a monitor, such as a skilled care provider, giving a unique and highly detailed record of a user's mobility and awareness at every location and time during a day.

### Example 6 - Programming the PLAM using modulated lighting

To the PLAM of Example 2 will be add the ability to have the programming in the computer changed by information received over the lighting. The programming information is transmitted over light using one of the techniques previously taught. The information is prefaced with a code to indicate to the computer that it is programming information. The programming information so received is then stored in the computer memory and used by the computer in making decisions and in giving guidance to the user.

### Example 7 - Message selected from Computer Memory

A memory device such as a computer memory, CD, or tape is loaded with a number of messages which can prove useful. Each message is stored in a coded, identifiable location in the memory device. A coded signal is sent over the network indicating which coded location and which message should be played. The coded signal is received, processed by a computer and used to identify and call up the message from the memory. The message from the memory is presented to the user. This message could be an audio message, textual message, graphical message or other message.

### Example 8 - Mixed Message from Computer Memory and Light Carried, Message

The devices of Example 7 have an enhanced capability to receive and process more extensive information from the lights. The system has the capability to present information in a mixed fashion. As an example, the system could be cued to present and then present aurally "This is the office of" from the computer memory and then "Mr. Smith" from the light transmitted audio message.

### Example 9 - Encryption Code

A message is encrypted using one of a number of encryption techniques known in the art which require an decryption code. The user is not provided with the decryption code. The computer or other device provided to the user has a receptor circuit which can receive and process encoded signals from the lighting in the area. The ambient lighting is modulated to contain the decryption code. The computer is able to process and decrypt the encrypted message only so long as the receptor circuit is viewing and processing the decryption code.

### Example 10 - Multiple Channels

A network is constructed with two or more lights in proximity transmitting information on two or more different frequencies or else with one or more lights each transmitting information on two or more different frequencies creating channels of information. A receiver is provided which is able to receive and process information from these channels. Different information is transmitted on the different channels.

### Example 11 - Multiple Channels to transmit different languages

In the network of Example 10, information is transmitted using the different channels to transmit different languages. As an example, one channel could transmit information in English and another channel to transmit the same information in Spanish.

### Example 12 - Lighting to provide descriptions of exhibits

In an facility where there are two or more areas with different items being exhibited, each area is provided with its own separate lighting. This lighting is modulated to provide a description of the exhibit which is being lighted. The user is provided with a receptor which will allow the user to receive a description of the exhibit. As the user moves from one exhibit to another, the lighting provides the appropriate description of the exhibit which they are viewing.

### Example 13 - Assistance to the Visually Impaired

The lights in a facility are modulated to provide guidance information to individuals who are visually impaired. This information could be of the sort of "Office X is on the right" or "The stairs are on the left." A visually impaired individual would have a receptor to process this information and receive the guidance.

### Example 14 - Assistance to the Hearing Impaired - Aural

The lights in a facility are modulated to provide information to individuals who are hard of hearing and require assistance. The information could be provided through a speaker, earphones or through a neck loop into a magnetic induction type hearing aid.

### Example 15 - Assistance to the Hearing Impaired - Textual

The lights in a facility are modulated to provide information to individuals who are deaf or hard of hearing and require assistance. The information could be textual, graphical or pictorial information.

### Example 16 - User which is Moving

The lights in an area are modulated to contain information. A user which is moving is provided with a receiver. Information is transmitted to the user which is moving.

### Example 17 - Lighting Inside a Vehicle

The lighting inside or on a vehicle is modulated to contain information. A user inside or on the vehicle is provided with a receiver. Information is transmitted to the user which is inside or on the vehicle. The vehicle can be an aircraft, boat, submarine, bus, auto, tank, other military vehicle, wheelchair, spacecraft or other vehicle. The vehicle can be moving or stationary.

### Example 18 - Guidance and directional information to a vehicle

Lighting outside a vehicle is modulated to provide information. Each light or sequence of lights is modulated to contain directional information or guidance information. The vehicle has sensors which in a sequential form will view the lights. By processing the information from the lights in sequence, and determining which lights are and are not in the field of view of the sensors, the vehicle can maintain its direction of travel. This is shown in the Fig. 2 below.

### Example 19 - Modulated running lights

Circuitry is provided to modulate the running lights on a vehicle. These lights will carry information generated by a source inside the vehicle. A receiver outside the vehicle can receive and process this modulated light and process the information to a user outside the vehicle. Another embodiment of this example would be the modulation of the headlights on a vehicle.

### Example 19 - Repeater Network

One light in a facility is modulated with a signal to carry information. An adjoining light has a receptor which is positioned to view the signal from the first light. This signal is processed by the circuitry in the second light and the signal from the second light is modulated to transmit the same signal as is contained in the modulated signal from the first light. A third light has a receptor which is positioned to view the signal from the second light. This light also has a repeater circuit similar to the second light. A network of lights throughout the facility is, in this manner, modulated to carry the same signal as the first light.

### Example 20 - Transmission through fluid

A light is modulated to carry a signal. The electromagnetic radiation from this light is allowed to fall on a receiver/receptor and the signal is processed. Water is placed in the path between the light and the receiver. No change is observed in the signal which is processed. The light is carried by a SCUBA diver who is underwater and is using the light for underwater illumination. The receiver is carried by another SCUBA diver who makes use of the information transmitted by the modulated light.

### Example 21 - Transmission through vacuum or a reduced pressure medium

A light is modulated to carry a signal. The electromagnetic radiation from this light is allowed to fall on a receiver/receptor and the signal is processed. Air or any other gas is partially or completely removed from the medium between the light and the receiver. No change is observed in the signal which is processed. The light is carried by an astronaut who is in space and is using the light for illumination. The receiver is carried by another astronaut or by a spacecraft which makes use of the information transmitted by the modulated light.

### Example 22 - Signal Source from Computer Memory provides repetitive signal

A computer memory is programmed to repeat, continuously, an information signal. This information signal is used to control the modulation of a light signal. A receiver receives and processes this information.

### Example 23 - Signal Source provides non repetitive signal

A non repetitive signal is provided from a microphone, tape, CD, record or other information storage device. This non-repetitive signal is used to control the modulation of a light signal. A receiver receives and processes this information.

### Example 24 - Lecture Hall

A network is created in a facility where two or more users are present. The users each have individual receivers and make personal use of the information transmitted by the lights.

### Example 25 - Compressed Data

Data from the signal source is compressed using a compression technique known in the art. Compressed data is transmitted over the network. The data is decompressed after it is received and processed by the receiver. The decompressed data is presented to the user.

### Example 26 -

A receptor is used which has the capability to respond to both infrared and visible radiation. The system using this receptor will be able to communicate using either infrared or visible radiation.

### Example 27 -

A receiver is used with two receptors, one of which is responsible in the visible region and the other in the infrared. Circuitry is used which will process a signal received on either of the two receptors. The system using this receptor will be able to communicate using either infrared or visible radiation.

### Example 28 -

A vibrator is present in the receiver. The circuitry is built into the receiver to receive a signal to signal the vibrator that it should vibrate and send an alert signal to the user. The turn-on signal could be a signal transmitted over the network or could be a radio or microwave signal.

## Claims

1. A communications network comprising:
a plurality of visible lights assemblies (30), each capable of transmitting a signal unique to that light assembly (30), said signal being encoded signal in the light provided by the visible light assembly (30) by means of visible light modulation;
electronic circuitry capable of providing the visible light;
a medium means through which visible light passes and is transmitted;
a receiver means for receiving and demodulating the light and for identifying and presenting the encoded signal from one of the light assemblies (30); and
a computer user means comprising a memory device (26); the network being **characterized by**:
the computer user means (38) is arranged to process the encoded signal and make further decisions based on the signal received in accordance with its preprogramming; and the memory device (36) has data other than data coding schemes stored in various coded locations and the information transmitted over the network comprises information on which coded locations should be selected and which corresponding data other than data coding schemes stored in those coded locations should be extracted from the memory device (36).

2. The network of claim 1 in which the visible light modulation is such that any variations in the visible light transmitted as a result of the modulation are imperceptible to the human eye.

3. The network of claim 1 in which the electronic methodology for transmitting said encoded signal comprises frequency modulation.

4. The network of claim 1 in which the computer means (38) then presents an audio message.

5. The network of claim 1 further comprising a clock (34) or other timekeeping device which can provide time information to the computer means (38).

6. The network of claim 1 further comprising the computer capability to store information on the sequence of light assemblies viewed by the receiver means.

7. A network of claim 6 further comprising the computer capability to store information on the sequence of light assemblies viewed by the receiver together with the time at which each light assembly (30) is viewed.

8. A network of claim 1 further comprising the capability of storing a list of which light assemblies (30) are authorized or not authorized for the computer user means.

9. A network of claim 8 further comprising the capability of deciding that the computer user means is receiving a signal from an unauthorized light assembly (30) and presenting information based on that decision.

10. A network of claim 8 further comprising the capability of deciding that the computer user means is receiving a signal from an unauthorized light assembly and sending a signal to an attendant.

11. A network of claim 8 further comprising the capability of receiving a reprogramming signal contained in modulated light and changing the stored memory of authorized and unauthorized light assemblies.

12. The communications network of claim 1, in which additional information is transmitted over the network and the information delivered by the computer user means comprises data from the memory storage device (36) and some information transmitted over the network.

13. The network of claim 1 in which the data transmitted over the network has been compressed.

14. The network of claim 1 in which the receiver comprises the capability to receive a signal or two or more wavelength regions.

15. The network of claim 1 in which the receiver comprises a vibratory signaller.

## Patentansprüche

1. Kommunikationsnetzwerk, mit:
einer Mehrzahl von sichtbaren Lichtanordnungen (30), wobei jede im Stande ist, ein für diese Lichtanordnung (30) eindeutiges Signal zu übertragen, wobei das Signal ein in dem Licht codiertes Signal ist, das durch die sichtbare Lichtanordnung (30) mittels sichtbarer Lichtmodulation bereitgestellt wird;
einer elektronischen Schaltungsanordnung, die im Stande ist, das sichtbare Licht bereitzustellen;
einer Mediumeinrichtung, durch die sichtbares Licht läuft und übertragen wird;
einer Empfängereinrichtung zum Empfangen und Demodulieren des Lichtes und zum Identifizieren und Präsentieren des codierten Signals von einer der Lichtanordnungen (30); und
einer Computer-Benutzereinrichtung, die eine Speichervorrichtung (26) umfasst; wobei das Netzwerk **dadurch gekennzeichnet ist, dass**:
die Computer-Benutzereinrichtung (38) angeordnet ist, um das codierte Signal zu verarbeiten und weitere Entscheidungen basierend auf dem empfangenen Signal in Übereinstimmung mit ihrer Vorprogrammierung durchzuführen; und die Speichervorrichtung (36) Daten verschieden von Daten-Codierschemata aufweist, die in verschiedenen codierten Stellen gespeichert sind, und die über das Netzwerk übertragenen Informationen Information umfasst, auf der codierte Stellen ausgewählt werden sollten, und die entsprechenden Daten verschieden von den Daten-Codierungsschemata, die in diesen codierten Stellen gespeichert sind, von der Speichervorrichtung (36) extrahiert werden sollten.

2. Netzwerk gemäß Anspruch 1, bei dem die sichtbare Lichtmodulation derart ist, dass irgendwelche Variationen in dem sichtbaren Licht, die als ein Ergebnis der Modulation übertragen werden, für das menschliche Auge nicht wahrnehmbar sind.

3. Netzwerk gemäß Anspruch 1, bei dem die elektronische Verfahrensweise zum Übertragen des codierten Signals Frequenzmodulation umfasst.

4. Netzwerk gemäß Anspruch 1, bei dem die Computer-Einrichtung (38) dann eine Audionachricht präsentiert.

5. Netzwerk gemäß Anspruch 1, ferner mit einer Uhr (34) oder einer anderen Zeitmesseinrichtung, die der Computer-Einrichtung (38) Zeitinformationen liefern kann.

6. Netzwerk gemäß Anspruch 1, ferner mit der Computer-Fähigkeit, Informationen über die Sequenz von Lichtanordnungen zu speichern, die durch die Empfängereinrichtung betrachtet wird.

7. Netzwerk gemäß Anspruch 6, ferner mit der Computer-Fähigkeit, Informationen über die Sequenz von Lichtanordnungen, die durch den Empfänger betrachtet wird, zusammen mit der Zeit, zu der jede Lichtanordnung (30) betrachtet wird, zu speichern.

8. Netzwerk gemäß Anspruch 1, ferner mit der Fähigkeit, eine Liste zu speichem, von der Lichtanordnungen (30) für die Computer-Benutzereinrichtung autorisiert oder nicht-autorisiert sind.

9. Netzwerk gemäß Anspruch 8, ferner mit der Fähigkeit zu entscheiden, dass die Computer-Benutzereinrichtung ein Signal von einer nicht-autorisierten Lichtanordnung (30) empfängt, und Informationen basierend auf dieser Entscheidung zu präsentieren.

10. Netzwerk gemäß Anspruch 8, ferner mit der Fähigkeit zu entscheiden, dass die Computer-Benutzereinrichtung ein Signal von einer nicht-autorisierten Lichtanordnung empfängt, und ein Signal an eine Bedienerperson zu senden.

11. Netzwerk gemäß Anspruch 8, ferner mit der Fähigkeit, ein in moduliertem Licht enthaltenes Umprogrammierungssignal zu empfangen und den Ladespeicher von autorisierten und nicht-autorisierten Lichtanordnungen zu ändern.

12. Kommunikationsnetzwerk gemäß Anspruch 1, bei dem zusätzliche Informationen über das Netzwerk übertragen werden, und die durch die Computer-Benutzereinrichtung gelieferten Informationen Daten von der Speicherungsvorrichtung (36) und einige über das Netzwerk übertragenen Informationen umfasst.

13. Netzwerk gemäß Anspruch 1, bei dem die über das Netzwerk übertragenen Daten komprimiert wurden.

14. Netzwerk gemäß Anspruch 1, bei dem der Empfänger die Fähigkeit aufweist, ein Signal oder zwei oder mehr Wellenlängenregionen zu empfangen.

15. Netzwerk gemäß Anspruch 1, bei dem der Empfänger eine Schwingungssignalisierungseinrichtung umfasst.

## Revendications

1. Réseau de communication comprenant :
une pluralité d'ensembles lumineux visibles (30), capables chacun de transmettre un signal propre à cet ensemble lumineux (30), ledit signal étant un signal encodé dans la lumière fournie par l'ensemble lumineux visible (30) à l'aide d'une modulation de lumière visible ;
des circuits électroniques capables de fournir la lumière visible ;
un moyen de support à travers lequel la lumière visible passe et est transmise ;
un moyen de réception destiné à recevoir et à démoduler la lumière et à identifier et présenter le signal encodé provenant de l'un des ensembles lumineux (30) ; et
un moyen utilisateur informatique comprenant un dispositif de mémoire (26) ; le réseau étant **caractérisé en ce que** :
le moyen utilisateur informatique (38) est agencé pour traiter le signal encodé et pour prendre d'autres décisions sur la base du signal reçu, selon sa pré-programmation ;
et
le dispositif de mémoire (36) possède des données autres que des schémas de codage de données stockés à différents emplacements codés, et les informations transmises sur le réseau comprenant des informations relatives aux emplacements codés qui doivent être sélectionnés, et aux données correspondantes autres que les schémas de codage de données stockés dans ces emplacements codés qui doivent être extraites du dispositif de mémoire (36).

2. Réseau selon la revendication 1, dans lequel la modulation de lumière visible est telle que toute variation éventuelle de la lumière visible transmise à la suite de la modulation est imperceptible à l'oeil humain.

3. Réseau selon la revendication 1, dans lequel la méthodologie électronique de transmission dudit signal encodé comprend une modulation de fréquence.

4. Réseau selon la revendication 1, dans lequel le moyen informatique (38) présente ensuite un message audio.

5. Réseau selon la revendication 1, comprenant en outre une horloge (34) ou tout autre dispositif de chronométrage qui puisse fournir des informations relatives à l'heure au moyen informatique (38).

6. Réseau selon la revendication 1, comprenant en outre la capacité informatique à stocker des informations relatives à l'ordre des ensembles lumineux vus par le moyen de réception.

7. Réseau selon la revendication 6, comprenant en outre la capacité informatique à stocker des informations relatives à l'ordre des ensembles lumineux vus par le récepteur, et au moment auquel chaque ensemble lumineux (30) est vu.

8. Réseau selon la revendication 1, comprenant en outre la capacité de stockage d'une liste des ensembles lumineux (30) qui sont autorisés ou non autorisés pour le moyen utilisateur informatique.

9. Réseau selon la revendication 8, comprenant en outre la capacité de choisir le fait que le moyen utilisateur informatique reçoive un signal de la part d'un ensemble lumineux non autorisé (30), et de présenter des informations sur la base de cette décision.

10. Réseau selon la revendication 8, comprenant en outre la capacité de choisir le fait que le moyen utilisateur informatique reçoive un signal de la part d'un ensemble lumineux non autorisé, et d'envoyer un signal à un tiers.

11. Réseau selon la revendication 8, comprenant en outre la capacité de recevoir un signal de re-programmation contenu dans la lumière modulée et de modifier la mémoire stockée des ensembles lumineux autorisés et non autorisés.

12. Réseau de communication selon la revendication 1, dans lequel des informations supplémentaires sont transmises sur le réseau, et les informations délivrées par le moyen utilisateur informatique comprennent des données provenant du dispositif de stockage à mémoire (36) et certaines informations transmises sur le réseau.

13. Réseau selon la revendication 1, dans lequel les données transmises sur le réseau ont été compressées.

14. Réseau selon la revendication 1, dans lequel le récepteur comprend la capacité à recevoir un signal ou deux zones de longueur d'onde ou plus.

15. Réseau selon la revendication. 1, dans lequel le récepteur comprend un dispositif de signalisation vibreur.
